# EUROPEAN PATENT SPECIFICATION

(11) **EP 2 339 183 B1**
(45) Date of publication and mention of the grant of the patent: **08.05.2019**
(21) Application number: 09821939.7
(22) Date of filing: 09.10.2009
(51) Int. Cl.: F04D 17/04, B29C 45/26, B29L 31/08

(54) **MOLDING MACHINE FOR FOLLOWING-THROUGH FAN, BLOWER AND BLADE WHEEL**
FORMMASCHINE FÜR EINEN DURCHLÜFTER, EIN GEBLÄSE UND EIN SCHAUFELRAD
MACHINE DE MOULAGE POUR VENTILATEUR, SOUFFLANTE ET ROUE À AUBES À ÉCOULEMENT TRAVERSANT

(30) Priority: 22.10.2008 JP 2008272255
(43) Date of publication of application: 29.06.2011
(73) Proprietor: Sharp Kabushiki Kaisha, Sakai City Osaka 590-8522 (JP)
(72) Inventor: SHIRAICHI, Yukishige, Osaka 590-8522 (JP)
(74) Representative: Treeby, Philip David William
(86) International application number: PCT/JP2009/067658
(87) International publication number: WO 2010/047242

(56) References cited:
- EP-A1- 0 676 546
- EP-A1- 1 921 321
- EP-A2- 0 816 687
- JP-A- 11 264 394
- JP-A- 60 017 296
- JP-A- H10 131 886
- JP-A- H10 148 196
- JP-A- 2003 028 089
- JP-A- 2007 085 356

## Description

### TECHNICAL FIELD

The present invention relates to a cross-flow fan, a blower and a molding machine for an impeller, and particularly to a cross-flow fan formed by stacking a plurality of impellers, a blower including the cross-flow fan, and a molding machine for an impeller.

### BACKGROUND ART

Indoor fans for air conditioners designed in various ways for the purpose of reducing noise and improving the efficiency have been proposed.

Japanese Patent Laying-Open No. 11-264394 for example discloses a transverse fan formed by axially stacking a plurality of multi-blade impellers. Each multi-blade impeller is formed by being injection-molded in a mold, and removed from the mold while rotated about its rotational axis in the direction of inclination of each blade.

This transverse fan aims to reduce rotation sound of the transverse fan by successively varying the pressure generated between the transverse fan, a nose and a fan casing.

A transverse fan disclosed in Japanese Patent Laying-Open No. 10-148196 is also formed by axially stacking a plurality of multi-blade impellers. Each multi-blade impeller includes a partition plate and a plurality of blades provided integrally and standing on a surface of the partition plate, and the blades are arranged annularly and inclined by a predetermined angle.

This transverse fan also aims to reduce rotation sound, similarly to the transverse fan disclosed in Japanese Patent Laying-Open No. 11-264394.

### DOCUMENT LIST

### PATENT DOCUMENT

Patent Document 1: Japanese Patent Laying-Open No. 11-264394
Patent Document 2: Japanese Patent Laying-Open No. 10-148196
Patent Document 3: JP H 10 148196
Patent Document 4: JP 2003 028089

### SUMMARY OF THE INVENTION

### PROBLEMS TO BE SOLVED BY THE INVENTION

In a molding process for the conventional transverse fans as described above, a resin molded product has to be rotated along blade molding holes in a cavity of a mold for removing the molded product from the mold. At this time, it is difficult to precisely match the angle of inclination of the blade molding holes with the angle at which the molded product is rotated for removing the product. Thus, the blade molding holes and the blades of the molded product more or less interfere with each other. Accordingly, friction is generated where the interference occurs, and a crack is opened from a portion where excessive stress is applied due to the friction. In particular, a radially inner portion of a blade is likely to be influenced by the stress, and a crack opened at this portion results in a crack of the whole blade

The above-referenced documents disclose that a conventional transverse fan is designed such that each blade is inclined by a predetermined angle, and also disclose that multi-blade impellers axially adjacent to each other are displaced by a predetermined angle in the direction of rotation about the axis. From the transverse fan designed in the above-described manner, blade passing sounds, which are generated when the blades of the transverse fan pass near a nose, are generated at respective portions in the axial direction of the fan in different cycles. Therefore, a large peak noise (nZ noise) of the conventional transverse fans as described above can be suppressed. The peak noise refers to noise that is generated when the blade passing sounds of the whole fan occur simultaneously. However, when an angular displacement between the multi-blade impellers about the axis is excessively large, a phase shift between a flow between blades on one side of the partition plate and a flow between blades on the other side thereof causes a secondary flow, resulting in excessive pulsation of forced vortex, and generation of abnormal noise (bubbling noise). Further, the abnormal noise (bubbling noise) is transmitted to a casing of an indoor unit to cause further vibrations and noise. If the multi-blade impellers are arranged without angular displacement therebetween about the axis for the purpose of suppressing the abnormal noise, respective blades of multi-blade impellers pass near the nose in the same cycle, and accordingly a large peak noise (nZ noise) is generated.

If a blade inclined relative to the axial direction (skew blade) like that of the above-described conventional transverse fans is employed, the air blowing performance is deteriorated and the power consumption increases. In addition, resin molding with a mold as described above is difficult.

An object of the present invention is to provide a cross-flow fan and a blower that can simultaneously suppress the peak noise and the abnormal noise and reduce the power consumption without deterioration in performance even if blades are inclined, and facilitate resin molding with a mold, and to provide a molding machine capable of forming impellers constituting the cross-flow fan.

### MEANS FOR SOLVING THE PROBLEMS

According to an aspect of the present invention, a cross-flow fan is formed by stacking a plurality of impellers in a direction of a central axis line, the impellers each including a support having a main surface and a plurality of blades spaced from each other on the main surface of the support, and arranged in order on the support such that the blades stand on the main surface, and respective heads of the blades of one impeller of the plurality of impellers and the support of another impeller adjacent to the one impeller being connected with each other to form the cross-flow fan. The blades are each formed such that a cross section of the blade perpendicular to the central axis line decreases from a bottom of the blade arranged in order on the main surface toward the head of the blade. A center of the cross section of the blade perpendicular to the central axis line is displaced frontward or backward in a direction of rotation about the central axis line, and displaced radially outward, from the bottom of the blade arranged in order on the main surface toward the head of the blade.

Preferably, where a cross section of the bottom of the blade perpendicular to the central axis line is a first reference plane, where a cross section of the head of the blade is a second reference plane, where a rotational angle by which the second reference plane is displaced from the first reference plane about the central axis line is rotational angle W, where a length of the blade in the direction of the central axis line is length L, where a distance by which the second reference plane is displaced radially outward from the first reference plane is distance r, where a central point and a central line of the first reference plane are made coincident with a central point and a central line of the second reference plane respectively, an outer periphery of the second reference plane and an outer periphery of the first reference plane are spaced by a constant distance over respective whole outer peripheries of the first reference plane and the second reference plane, and where the constant distance is distance e, W/L is not more than 0.15, and r/e is not less than 0.3 and not more than 1.5.

Preferably, the blades are spaced from each other, thereby forming a gap between the blades adjacent to each other in the direction of rotation, and the blades are arranged such that a width of at least one of a plurality of the gaps defined in the impeller is different from a width of other gaps.

Preferably, the impellers include a first impeller and a second impeller adjacent to head side of the blades of the first impeller, and the gap formed in the first impeller and the gap of the second impeller adjacent to the gap of the first impeller are different from each other in width. Preferably, where an arbitrary one of the plurality of blades provided to the first impeller is a first reference blade and a blade that is one of the plurality of blades provided to the second impeller and corresponds to the first reference blade is a second reference blade, the head of the first reference blade is connected to a first main surface of the support of the second impeller, and the blades of the second impeller are arranged in order on a second main surface located opposite to the first main surface, and the head of the first reference blade is adjacent to the bottom of a blade of the second impeller that is different from the second reference blade, and the bottom of the second reference blade is adjacent to the head of a blade of the first impeller that is different from the first reference blade. Preferably, the impellers include a first impeller and a second impeller adjacent to head side of the blades of the first impeller, and the gap formed in the first impeller and the gap of the second impeller adjacent to the gap of the first impeller are substantially identical to each other in width.

A blower according to the present invention includes the cross-flow fan as described above. Preferably, the blower further includes: a casing housing the cross-flow fan and having an outlet formed for allowing air forced to be delivered by the cross-flow fan to blow to outside; and a flap provided in the casing and serving as a partition between a supply region for supplying air to the cross-flow fan and an outflow region for supplying air from the cross-flow fan toward the outlet, and the flap is provided parallel to a rotational axis of the cross-flow fan.

A method of operating a molding machine for an impeller according to the present invention is also provided.

### EFFECTS OF THE INVENTION

The cross-flow fan and the blower of the present invention can be used to simultaneously suppress the peak noise and the abnormal noise while reducing the power consumption, and facilitate resin molding with a mold.

### BRIEF DESCRIPTION OF THE DRAWINGS

plurality of blades provided to the second impeller and corresponds to the first reference blade is a second reference blade, the head of the first reference blade is connected to a first main surface of the support of the second impeller, and the blades of the second impeller are arranged in order on a second main surface located opposite to the first main surface, and the head of the first reference blade is adjacent to the bottom of a blade of the second impeller that is different from the second reference blade, and the bottom of the second reference blade is adjacent to the head of a blade of the first impeller that is different from the first reference blade. Preferably, the impellers include a first impeller and a second impeller adjacent to head side of the blades of the first impeller, and the gap formed in the first impeller and the gap of the second impeller adjacent to the gap of the first impeller are substantially identical to each other in width.

A blower according to the present invention includes the cross-flow fan as described above. Preferably, the blower further includes: a casing housing the cross-flow fan and having an outlet formed for allowing air forced to be delivered by the cross-flow fan to blow to outside; and a flap provided in the casing and serving as a partition between a supply region for supplying air to the cross-flow fan and an outflow region for supplying air from the cross-flow fan toward the outlet, and the flap is provided parallel to a rotational axis of the cross-flow fan.

A molding machine for an impeller according to the present invention includes a cavity formed with an inner surface formed to conform to an outer surface of an impeller of the cross-flow fan as described above.

### EFFECTS OF THE INVENTION

The cross-flow fan and the blower of the present invention can be used to simultaneously suppress the peak noise and the abnormal noise while reducing the power consumption, and facilitate resin molding with a mold. With a molding machine for an impeller of the present invention, the cross-flow fan as described above can be formed.

### BRIEF DESCRIPTION OF THE DRAWINGS

Fig. 1 is a cross-sectional view schematically illustrating an air conditioner 100 including a cross-flow fan 200 according to an embodiment of the present invention.
Fig. 2 is a perspective view of cross-flow fan 200.
Fig. 3 is a perspective view of an impeller 226.
Fig. 4 is a plan view of impeller 226.
Fig. 5 is a plan view of a blade 224 illustrating a structure of blade 224 and its nearby region, as seen from above in the direction of a rotational central line O.
Fig. 6 illustrates a relative positional relation between a first reference plane 300 and a second reference plane 301.
Fig. 7 is a plan view where a first central line CL1 of first reference plane 300 and a second central line CL2 of second reference plane 301 are made coincident with each other and a first central point CP1 of first reference plane 300 and a second central point CP2 of second reference plane 301 are made coincident with each other in the direction of rotational central line O.
Fig. 8 is a cross-sectional view along a line VIII-VIII in Fig. 5.
Fig. 9 is a cross-sectional view along a line IV-IV in Fig. 5.
Fig. 10 is a graph illustrating the results of measurement of vibrations generated when a conventional cross-flow fan and a cross-flow fan in an embodiment of the present invention attached to respective casings identical to each other are driven.
Fig. 11 is a schematic side view of a cross-flow fan, illustrating a state of arrangement of an impeller 226A and an impeller 226B.
Fig. 12 is a schematic side view of a cross-flow fan, illustrating a modification of the state of arrangement of impeller 226A and impeller 226B.
Fig. 13 is a schematic side view of cross-flow fan 200, illustrating another modification of the state of arrangement of impeller 226A and impeller 226B.

### MODES FOR CARRYING OUT THE INVENTION

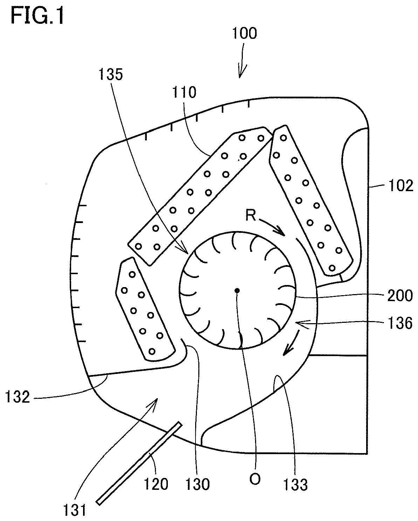

With reference to Figs. 1 to 13, a cross-flow fan 200 according to the present invention and an air conditioner 100 including this cross-flow fan 200 will be described.

Fig. 1 is a cross-sectional view schematically illustrating air conditioner 100 including cross-flow fan 200 according to an embodiment of the present invention. As shown in Fig. 1, air conditioner 100 includes cross-flow fan 200 provided rotatably about a rotational central line O, a casing 102 housing cross-flow fan 200, and a plurality of heat exchangers 110 arranged in casing 102.

Casing 102 has a slit formed in any of a top surface, a front surface or a side surface. Through the slit, the outdoor air can be drawn into casing 102 by driving cross-flow fan 200. The indoor air is taken in through the slit by rotationally driving cross-flow fan 200. The intake indoor air undergoes heat exchanging by heat exchangers 110 and is thereafter forced by cross-flow fan 200 to be blown into the room through a wind path 131 provided in casing 102 and an outlet.

In casing 102, an upper wall 132 and a lower wall 133 are provided, and upper wall 132 and lower wall 133 define wind path 131. The outlet is formed at an end of wind path 131. Both of upper wall 132 and lower wall 133 are located lower than rotational central line O, while upper wall 132 is located higher than lower wall 133. Lower wall 133 is formed to extend from below cross-flow fan 200 to the rear side with respect to cross-flow fan 200 and to further extend higher than rotational central line O.

Upper wall 132 extends from the front side of casing 102 toward cross-flow fan 200 to be located close to cross-flow fan 200. Further, at an end of upper wall 132 on the cross-flow-fan 200 side, a flap 130 is formed.

In the space located around cross-flow fan 200, a region extending forward from flap 130 in rotational direction R to an upper end of lower wall 133 is a supply region 135 for supplying air into cross-flow fan 200. A region extending forward from an upper end of lower wall 133 in rotational direction R to reach flap 130 is an outflow region 136 where air flows out from cross-flow fan 200 into wind path 131. Flap 130 is located near cross-flow fan 200 and serves as a partition between outflow region 136 and supply region 135.

At the outlet, a wind guide plate 120 for freely changing the direction of airflow from the outlet is provided.

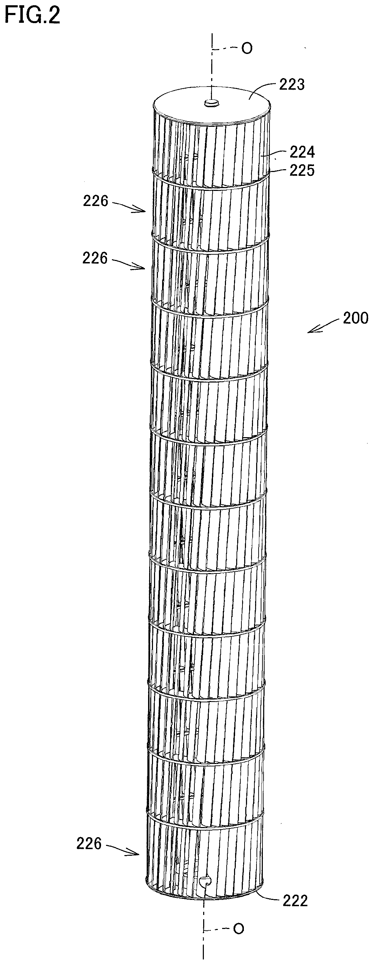

Fig. 2 is a perspective view of cross-flow fan 200. As shown in Fig. 2, cross-flow fan 200 is formed by stacking a plurality of impellers 226 in the direction of rotational central line O. Support plates (supports) 222, 223 that are located at the opposing outermost ends in the direction of rotational central line O of cross-flow fan 200 are each provided with one of a shaft protruding from support plate 222, 223 for allowing cross-flow fan 200 to be attached to casing 102 of air conditioner 100, and a bearing receiving a shaft protruding from casing 102 or a fan motor (not shown) for rotationally driving the fan.

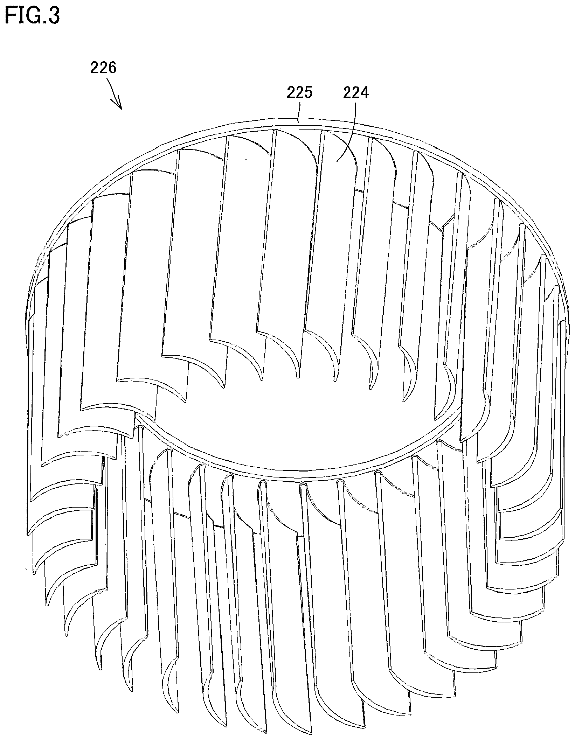

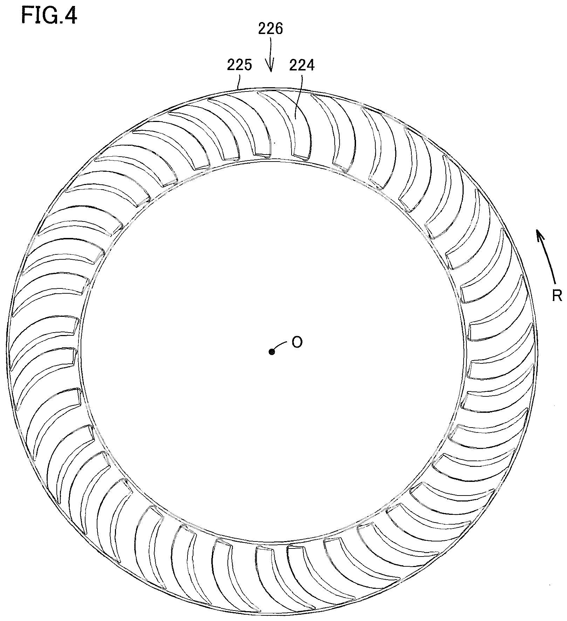

Fig. 3 is a perspective view of impeller 226, and Fig. 4 is a plan view of impeller 226. As shown in Figs. 3 and 4, impeller 226 includes a support plate 225 having a main surface, and a plurality of blades 224 spaced from each other on the main surface of support plate 225. Support plate 225 is an annular plate member centered at rotational central line O.

Impeller 226 is formed by injection molding, blades 224 and support plate 225 are integrally formed, and respective bottoms of blades 224 are arranged in order on the main surface of support plate 225. Respective heads of blades 224 are attached to be secured to another support plate 225 of another impeller 226 adjacent to impeller 226 having these blades 224 formed thereon, by, for example, ultrasonic crimping.

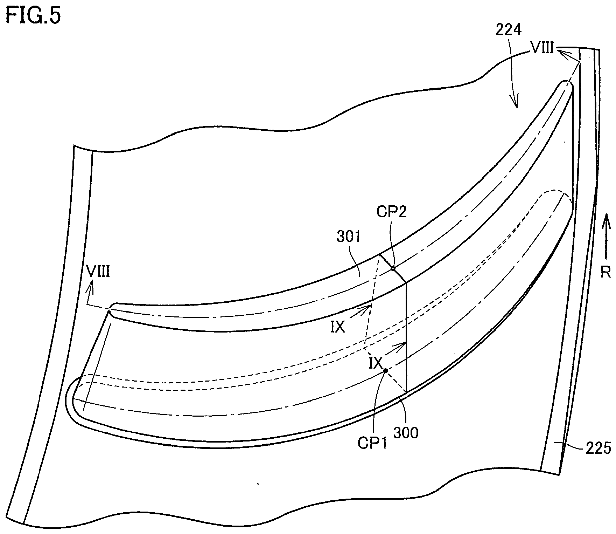

Fig. 5 is a plan view of blade 224 illustrating a structure of blade 224 and its nearby region as seen from above in the direction of rotational central line O. As shown in Fig. 5, blade 224 is entirely arch-shaped, and curves from the radially inner side toward the radially outer side in the direction toward the front side in rotational direction R.

In Fig. 5, among cross sections of blade 224 that are perpendicular to rotational central line O, a cross section at the bottom of blade 224 is referred to as a first reference plane 300, and a cross section at the head of blade 224 is referred to as a second reference plane 301.

The bottom of blade 224 is usually provided with so-called "thickened" portion like a base R for reinforcement purpose. First reference plane 300 here, however, is defined as a cross section without this so-called thickened portion. Second reference plane 301 is defined as a cross section at the position corresponding to the attachment surface to be attached to another support plate when impellers are attached to each other. Therefore, even if the head of the blade is not parallel with a plane perpendicular to rotational central axis O, the cross section at the head of the blade at the position corresponding to the position of the attachment surface to be attached to another support plate may be regarded as the second reference plane.

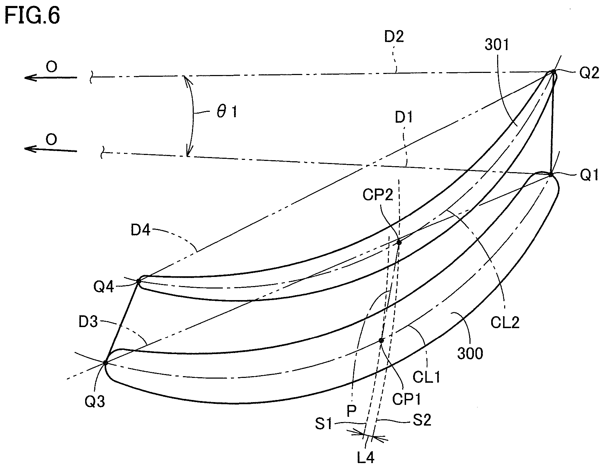

Fig. 6 illustrates a relative positional relation between first reference plane 300 and second reference plane 301. In Fig. 6, a first central line CL1 is a central line (camber line) of first reference plane 300, and respective distances from the opposing sides of first reference plane 300 to first central line CL1 are equal to each other.

The points where the outer perimeter of first reference plane 300 and first central line CL1 meet are an outer end Q1 and an inner end Q3. Outer end Q1 is located on the radially outer side and inner end Q3 is located on the radially inner side. A point on first central line CL1 where the distance from outer end Q1 to this point and the distance from inner end Q3 to this point are equal to each other is a first central point CP1 of first reference plane 300.

Likewise, a second central line CL2 is a central line (camber line) of second reference plane 301, and respective distances from the opposing sides of second reference plane 301 to second central line CL2 are equal to each other. The points where the outer perimeter of second reference plane 301 and second central line CL2 meet are an outer end Q2 and an inner end Q4. Outer end Q2 is located on the radially outer side and inner end Q4 is located on the radially inner side. A point on second central line CL2 where the distance from outer end Q2 to this point and the distance from inner end Q4 to this point are equal to each other is a second central point CP2 of second reference plane 301.

Second reference plane 301 is located away from first reference plane 300 in the direction of central rotational line O, and second reference plane 301 is located forward in rotational direction R relative to first reference plane 300 and located outward in the radial direction of support plate 225.

Specifically, second reference plane 301 is displaced from first reference plane 300 by a rotational angle θ1 with respect to rotational central line O, and second reference plane 301 is further displaced radially outward from first reference plane 300 by an outward displacement L4.

Rotational angle θ1 may be defined by a first virtual axis line D1 connecting outer end Q1 of first reference plane 300 and rotational central line O, and a second virtual axis line D2 connecting outer end Q2 of second reference plane 301 and rotational central line O. Rotational angle θ1 is a smaller one of cross angles defined by first virtual axis line D1 and second virtual axis line D2.

The way to define rotational angle θ1 is not limited to the above-described one. For example, this angle may be defined as a cross angle between a first chord D3 of first reference plane 300 and a second chord D4 of second reference plane 301. Here, first chord D3 is a virtual line segment connecting outer end Q1 and inner end Q3, and second chord D4 is a virtual line segment connecting outer end Q2 and inner end Q4.

Outward displacement L4 may be defined as radially outward displacement L4 between a virtual circle S1 centered at rotational central line O and passing first central point CP1, and a virtual circle S2 centered at rotational central line O and passing second central point CP2.

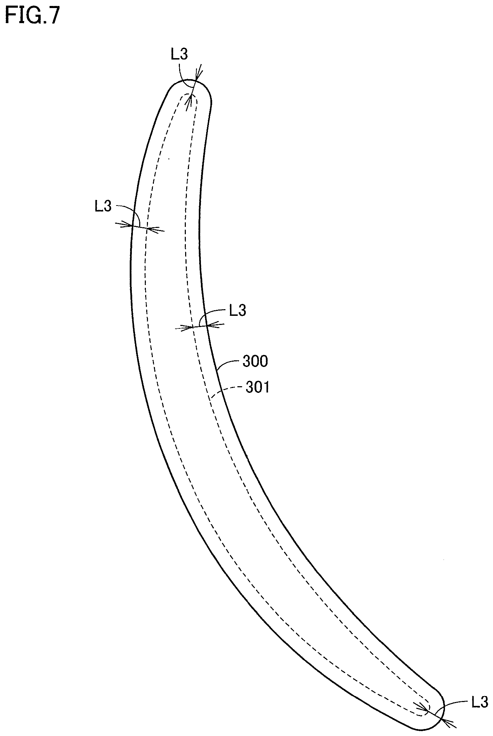

Fig. 7 is a plan view where first central line CL1 of first reference plane 300 and second central line CL2 of second reference plane 301 are made coincident with each other, and first central point CP1 of first reference plane 300 and second central point CP2 of second reference plane 301 are made coincident with each other.

In Fig. 7, the distance between the outer perimeter of second reference plane 301 and the outer perimeter of first reference plane 300 is constant, and this distance is referred to as reduction L3.

As seen from above, the area of second reference plane 301 is smaller than that of first reference plane 300, and blade 224 is formed so that the cross section perpendicular to rotational central line O decreases from the bottom side toward the head side.

In this way, blade 224 is formed so that the area of the cross section of blade 224 perpendicular to rotational central line O gradually decreases from first reference plane 300 toward second reference plane 301, and the center of the cross section of blade 224 perpendicular to rotational central line O is displaced forward in rotational direction R and radially outward about rotational central line O, from first reference plane 300 toward second reference plane 301.

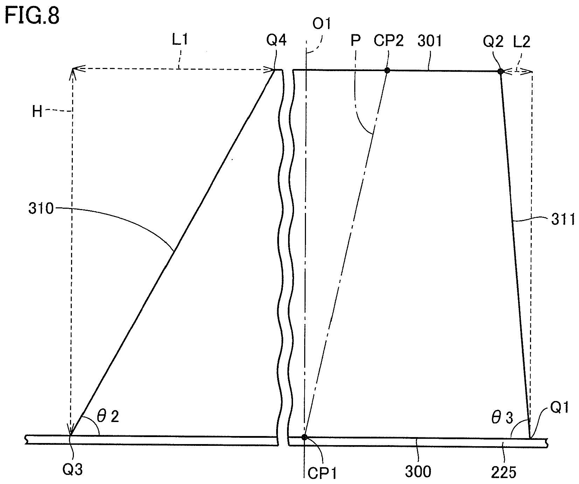

Fig. 8 is cross-sectional view along line VIII-VIII in Fig. 5, passing first central line CL1 and second central line CL2. In Fig. 8, the angle defined by an inner side 310 connecting inner end Q3 and inner end Q4 and the main surface of support plate 225 (virtual plane perpendicular to rotational central line O) is referred to as cross angle θ2. The angle formed by an outer side 311 connecting outer end Q1 and outer end Q2 and the main surface of support plate 225 is referred to as cross angle θ3. Cross angle θ2 is smaller than cross angle θ3.

In the present embodiment, inner side 310 is inclined radially outward from the main surface of support plate 225, and outer side 311 is inclined radially inward from the main surface of support plate 225. Here, outer side 311 may not necessarily be inclined radially inward and may be inclined radially outward depending on the case. In this case as well, cross angle θ3 is defined in the same manner as the one described above. It should be noted that, in the case where outer side 311 inclines radially inward, a relatively simpler mold may be used since so-called undercut is not provided when the blade is molded. Therefore, the outer side inclined radially inward is more preferable than the outer side inclined radially outward.

A radial distance L1 between inner end Q3 of first reference plane 300 and inner end Q4 of second reference plane 301 is longer than a radial distance L2 between outer end Q1 of first reference plane 300 and outer end Q2 of second reference plane 301.

In the example shown in Fig. 8, inner side 310 and outer side 311 are lineally formed. The shape of the sides, however, is not limited to this and these sides may be curved instead.

In this case, at the same height from the main surface of support plate 225, the cross angle between the tangent of inner side 310 and a virtual plane perpendicular to rotational central line O is smaller than the cross angle between the tangent of outer side 311 and a virtual plane perpendicular to rotational central line O.

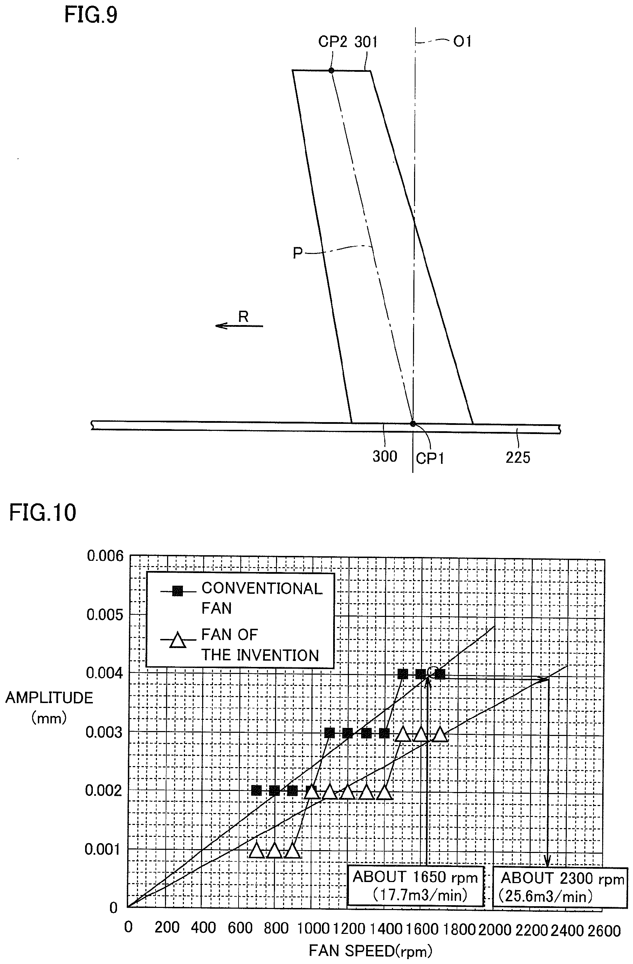

Fig. 9 is a cross-sectional view along line IV-IV in Fig. 5. As shown in Fig. 9 and Fig. 8 referenced above, second central point CP2 of second reference plane 301 is located forward in rotational direction R and located radially outward relative to first central point CP1 of first reference plane 300.

The center of the cross section of blade 224 perpendicular to rotational central line O is displaced forward in rotational direction R and displaced radially outward, from the bottom of blade 224 toward the head of blade 224. Accordingly a central line P connecting respective centers of cross sections of blade 224 is inclined radially forward in rotational direction R and radially outward, from the bottom toward the head of blade 224.

The shape of blade 224 is defined in the above-described manner, so that respective sides of blades can be inclined outward. In this way, the surface pressure can be kept low that is applied to the radially inner side of blade 224 when the molded product of impeller 226 is removed from the mold while rotating the mold. Thus, when the molded product is removed from the mold, crack or break can be prevented from occurring on the radially inner side of blade 224 that is likely to crack in particular.

In the example shown in Figs. 1 to 9, each blade 224 is formed so that the blade inclines forward in rotational direction R from the support 225, the blade may be formed to be inclined backward in rotational direction R.

Further, in the case where cross-flow fan 200 having blades 224 formed in the above-described manner is arranged parallel to flap 130 shown in Fig. 1, abnormal noise (bubbling noise) and peak noise (nZ noise) can be suppressed to the extent sufficient for use, without designs such as protrusion, depression or inclination on flap 130, as described below. The structure of casing 102 can thus be simplified.

Impeller 226 having a plurality of blades 224 as described above is formed by an injection molding machine that is formed with the inner surface of a cavity extending to conform to the outer peripheral surfaces of blades 224 and impeller 226.

Table 1 below shows positive and negative differences in volume of air (m³/min) generated by cross-flow fan 200 with various parameters varied, with respect to a reference volume of air (m³/min) generated by a cross-flow fan having blades without skew and radial inclination where rotational angle θ1 is zero (deg) and outward displacement L4 is zero (mm).

In Table 1 below, "L" represents a length of the blade (mm) (height H in Fig. 8), "e" represents a taper reduction (L3 in Fig. 7), "w" represents a rotational angle (deg) of the cross section of the blade from the bottom to the head of the blade (rotational angle θ1 in Fig. 6), and "r" represents an outward displacement (mm) of the blade cross section from the bottom to the head of the blade (outward displacement L4 in Fig. 6).

Since the air volume of cross-flow fan 200 is proportional to each of the diameter, the length and the number of revolutions of the fan, the same data as that shown in the table is obtained for the positive and negative values in the table, regardless of the diameter, the length and number of revolutions of the fan.

**Table 1**

| r/e | | | | | | | | | | | | |
|---|---|---|---|---|---|---|---|---|---|---|---|---|
| 3.0 | -0.4 | -0.4 | -0.5 | -0.6 | -0.6 | -0.7 | -0.9 | -1.1 | -1.5 | -2.1 | -2.6 | |
| 2.7 | -0.2 | -0.4 | -0.5 | -0.5 | -0.5 | -0.6 | -0.7 | -0.9 | -1.4 | -1.8 | -2.5 | |
| 2.4 | -0.1 | -0.1 | -0.2 | -0.3 | -0.3 | -0.4 | -0.5 | -0.8 | -1.2 | -1.8 | -2.5 | |
| 2.1 | 0.0 | 0.0 | -0.1 | -0.1 | -0.2 | -0.3 | -0.4 | -0.7 | -1.2 | -1.7 | -2.4 | |
| 1.8 | 0.1 | 0.1 | 0.0 | -0.1 | -0.1 | -0.2 | -0.2 | -0.6 | -1.0 | -1.6 | -2.2 | |
| 1.5 | 0.3 | 0.3 | 0.2 | 0.2 | 0.1 | 0.0 | -0.2 | -0.4 | -0.6 | -1.3 | -1.9 | |
| 1.2 | 0.5 | 0.5 | 0.4 | 0.4 | 0.2 | 0.1 | 0.0 | -0.2 | -0.6 | -1.2 | -1.7 | |
| 0.9 | 0.8 | 0.7 | 0.6 | 0.6 | 0.5 | 0.3 | 0.2 | 0.0 | -0.2 | -0.8 | -1.5 | |
| 0.6 | 0.6 | 0.6 | 0.5 | 0.4 | 0.4 | 0.2 | 0.1 | -0.1 | -0.6 | -1.1 | -1.7 | |
| 0.3 | 0.3 | 0.3 | 0.2 | 0.2 | 0.1 | 0.1 | -0.2 | -0.5 | -0.9 | -1.5 | -2.0 | |
| 0 | 0.0 | 0.0 | -0.1 | -0.1 | -0.2 | -0.3 | -0.4 | -0.7 | -1.1 | -1.6 | -2.2 | |
| | 0 | 0.03 | 0.06 | 0.09 | 0.12 | 0.15 | 0.18 | 0.21 | 0.24 | 0.27 | 0.30 | w/L |

It is seen from above Table 1 that the air volume is larger than that of the reference cross-flow fan in the case where w/L is not larger than 0.15 and r/e is not smaller than 0.3 and not larger than 1.5.

As shown in Table 1, as r/e is closer to 1.0, the outer side of the blade is closer to parallel with the rotational axis, and the air volume is larger. As r/e is too large, the angle with the rotational axis is large as well, and accordingly the air volume tends to be smaller.

It is further seen from Table 1 that, as w/L is larger, basically the air volume tends to be smaller. In the case where r (outward displacement (mm) of the blade cross section from the bottom toward the head of the blade (outward displacement L4 in Fig. 6)) is zero like the above-described conventional transverse fan and only w (rotational angle (deg) of the blade cross section from the bottom toward the head of the blade) is varied, the air volume tends to be smaller.

Fig. 10 is a graph illustrating the results of measurement of vibrations of a casing. Here, a conventional cross-flow fan having blades without skew and without radial inclination, and the cross-flow fan of the present embodiment were attached to respective casings identical to each other and driven, and resultant vibrations were measured. In Fig. 10, the solid square represents the conventional cross-flow fan, and the blank triangle represents cross-flow fan 200 of the present embodiment. The horizontal axis represents the speed (rpm) of the fan, and the vertical axis represents the amplitude of vibrations of the casing.

As shown in Fig. 10, the amplitude of vibrations of the casing of cross-flow fan 200 of the present embodiment is smaller by approximately 30% relative to the conventional cross-flow fan under condition that the fan speed is the same. Further, under the condition that the amplitude (vibrations) is the same, the speed of cross-flow fan 200 of the present embodiment can be set to a higher speed as compared with the conventional cross-flow fan, and accordingly the volume of air generated by the fan of the present embodiment can be increased.

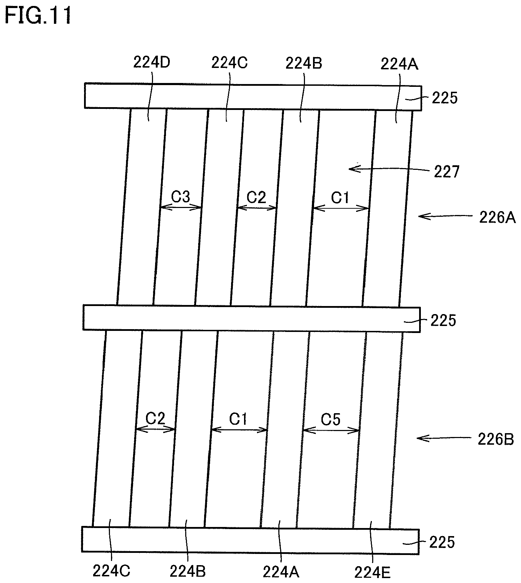

Fig. 11 is a schematic side view of cross-flow fan 200, illustrating an example of impeller 226 as well as the state of arrangement of an impeller 226A and an impeller 226B. In Fig. 11, impeller 226A and impeller 226B are identical in shape. While distances C1 to C5 are different from each other, the difference between the circumferential dimension of any of the distances and that of equal distances C between blades 224 that are all arranged at equal intervals is at most approximately 20%. Therefore, the arrangement of blades 224A to 224E is not extremely different from the arrangement of blades 224 that are all equally spaced from each other. In the example shown in Fig. 11, impeller 226B is secured (attached) to impeller 226A in the state where impeller 226B is rotated backward in rotational direction R about rotational central line O, relative to impeller 226A. The blade of impeller 226B that is adjacent to blade 224B (first reference blade) of impeller 226A is blade 224A located forward in rotational direction R relative to corresponding blade 224B of impeller 226B, and blade 224B of impeller 226A and blade 224A of impeller 226B are adjacent to each other in the vicinity of support plate 225. In this case, the arrangement of blades 224A to 224E is not extremely different from the arrangement of blades 224 all equally spaced from each other, as described above. Thus, blade 224B of impeller 226A is adjacent to blade 224A of impeller 226B, blade 224C of impeller 226A is adjacent to blade 224B of impeller 226B, and blade 224D of impeller 226A is adjacent to blade 224C of impeller 226B. Accordingly, respective blades of impeller 226B that are adjacent to blades 224A, 224B, 224C of impeller 226A are not the corresponding blades of impeller 226A but those blades located forward in rotational direction R by one blade.

In this way, pulsation of forced vortex accompanying the secondary flow near each support plate 225 can also be suppressed, and abnormal noise (bubbling noise) can be alleviated.

While Fig. 11 illustrates the example where blades 224A, 224B, 224C are adjacent to those blades located forward by one blade in rotational direction R, in the vicinity of the support plate, the adjacently located blades may not those located forward in rotational direction R by "one blade" and may be "multiple blades", and may be those located "backward" in rotational direction R instead of "forward". In other words, as long as the condition that the head of a blade of an impeller and the bottom of a different blade of another impeller are adjacent to each other in the vicinity of support plate 225, the blade passing sounds are not generated simultaneously and thus peak noise (nZ noise) can be suppressed, and pulsation of forced vortex accompanying the secondary flow near support plate 225 can be suppressed, so that abnormal noise (bubbling noise) can be alleviated. In addition, since blades 224 are inclined, the peak noise (nZ noise) can be sufficiently suppressed even if the head of a blade of an impeller and the bottom of a blade of another impeller are located adjacent to each other near the support plate.

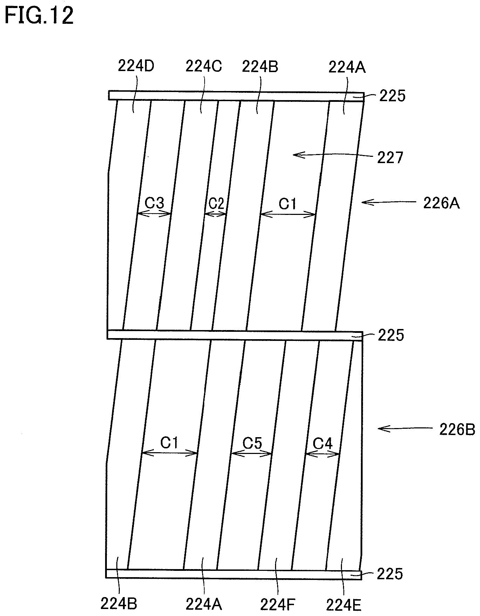

Fig. 12 is a schematic side view of cross-flow fan 200, illustrating a modification of the arrangement of impeller 226A and impeller 226B. As shown in Fig. 12, a plurality of blades 224A to 224E provided to each impeller 226 are spaced from each other, and a gap 227 where air can flow is formed between blades 224A to 224E adjacent to each other. Gap 227 extends in the direction in which blades 224A to 224E extend, and respective widths of gaps 227 are made different from each other.

Thus, blades 224A to 224E can be attached at different intervals to reduce nZ noise (peak noise) generated when cross-flow fan 200 is rotated. In the example shown in Fig. 12, distances C1 to C5 between blades 224A to 224E are made different from each other. The nZ noise can also be reduced in the case where the circumferential width of at least one gap 227 is made different from the width or other gaps 227.

In the example shown in Fig. 12, impeller 226A and impeller 226B provided on the head side of blades 224A to 224D of impeller 226A are shown.

Specifically, respective heads of blades 224 of impeller 226A are fit in and attached to a groove formed in the top surface (another main surface) of support plate 225 of impeller 226B.

Gap 227 formed in impeller 226A and gap 227 of impeller 226B that is adjacent to gap 227 of impeller 226A in the direction in which blade 224 extends are different in width.

Thus, impellers 226A and 226B axially adjacent to each other have respective blades 224 that are circumferentially displaced from each other, so that respective acoustic waves of impellers 226 have a phase difference therebetween and the acoustic waves cancel each other. In this way, the noise generated while cross-flow fan 200 is rotating can be reduced.

Specifically, impeller 226A and impeller 226B are identical in shape, while impeller 226B is secured (attached) to impeller 226A in the state where impeller 226B is rotated backward in rotational direction R about rotational central line O, relative to impeller 226A.

The blade of impeller 226B that is adjacent to blade 224B (first reference blade) of impeller 226A is blade 224A located forward in rotational direction R relative to corresponding blade 224B of impeller 226B, and blade 224B of impeller 226A and blade 224A of impeller 226B are adjacent to each other in the vicinity of support plate 225. Thus, impeller 226B is placed in the state where impeller 226B is rotated relative to impeller 226A, so that gap 227 of impeller 226A and adjacent gap 227 of impeller 226B are different from each other.

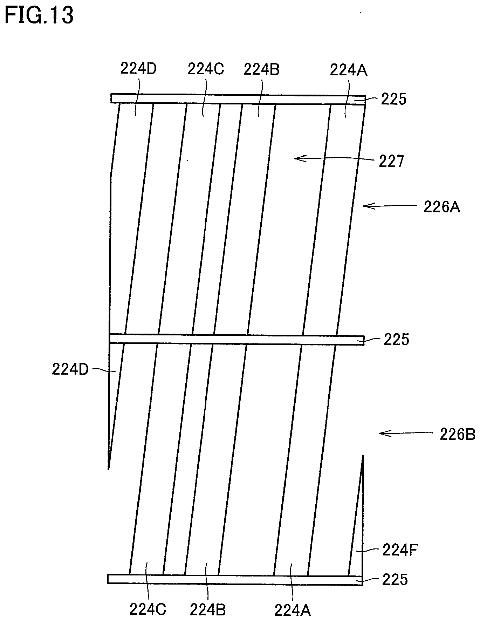

Fig. 13 is a schematic side view of cross-flow fan 200, illustrating another modification of the arrangement of impeller 226A and impeller 226B. In the example shown in Fig. 13, impeller 226A and impeller 226B are arranged in such a manner that gap 227 formed in impeller 226A and adjacent gap 227 of impeller 226B have the same width.

Therefore, gap 227 extends from one end to the other end of cross-flow fan 200 with a constant width, and respective widths of gaps 227 circumferentially adjacent to each other are different from each other. In other words, at the head of blade 224 of impeller 226A, the bottom of corresponding blade 224 of impeller 226B is located, and each of blades 224 arranged at different intervals in the circumferential direction extends linearly from one end to the other end of cross-flow fan 200.

A difference between this another modification illustrated in Fig. 13 and the example above illustrated in Fig. 11 is as follows. In Fig. 13, the head of a blade of an impeller and the bottom of a corresponding blade of another impeller are located at the same position at the partition therebetween, and thus corresponding blades of respective impellers extend linearly from one end to the other end of cross-flow fan 200. Therefore, while the effect of suppressing peak noise (nZ noise) of this modification illustrated in Fig. 13 is slightly smaller than that of the example illustrated in Fig. 11, there can be substantially no displacement, regarding all blades, between the head of a blade and the bottom of another blade on the opposing sides of support plate 225. Accordingly, pulsation of forced vortex accompanying the secondary flow near support plate 225 can be more appropriately suppressed, and abnormal noise (bubbling noise) can be more appropriately alleviated.

In this way, a plurality of impellers 226 are stacked on each other, so that pulsation of forced vortex accompanying the secondary flow near support plate 225 can be suppressed and abnormal noise (bubbling noise) can be alleviated. Further, because of the inclination of blades 224 and gaps 227, the blade passing sounds do not simultaneously occur, and thus peak noise (nZ noise) can be suppressed at the same time. Accordingly, the rotational speed of the fan can be increased as compared with the conventional fan, under the condition that respective noise levels are substantially identical, and the available upper limit of the rotational speed of the fan can be increased as compared with the conventional fan. Thus, the blowing ability of the fan can be further improved.

While embodiments of the present invention have been described, it should be construed that the embodiments disclosed herein are by way of illustration in all respects, not by way of limitation. It is intended that the scope of the present invention is defined by claims, not by the above description of the embodiments, and includes all modifications and variations equivalent in meaning and scope to the claims. Numerical values referenced above are also examples and the invention is not limited to the numerical values and the range thereof.

### INDUSTRIAL APPLICABILITY

The present invention is applicable to a cross-flow fan, a blower and a molding machine for an impeller, and particularly suitable for a cross-flow fan formed by stacking a plurality of impellers, a blower including this cross-flow fan, and a molding machine for the impellers.

### DESCRIPTION OF THE REFERENCE SIGNS

100 air conditioner, 102 casing, 110 heat exchanger, 120 wind guide plate, 130 flap, 200 cross-flow fan, 222, 223, 225 support plate, 224 blade, 226 impeller, 227 gap, 300, 301 reference plane, 310 inner side, 311 outer side, CL1, CL2, P central line, CP1, CP2 central point, D1, D2 virtual axis line, D3, D4 blade chord, e, L1, L2, r distance, L3 reduction, L4 outward displacement, O rotational central line, Q1, Q2 outer end, Q3, Q4 inner end, R rotational direction, S1, S2 virtual circle, W, θ1 rotational angle, θ2, θ3 cross angle

## Claims

1. A cross-flow fan formed by stacking a plurality of impellers (226) in a direction of a central axis line (O), said impellers (226) each including a support (225) having a main surface and a plurality of blades (224) spaced from each other on the main surface of said support, and arranged in order on said support such that said blades stand on said main surface, and respective heads of the blades of one impeller of said plurality of impellers and said support of another impeller adjacent to said one impeller being connected with each other to form said cross-flow fan,
said blades (224) each being formed such that a cross section of said blade perpendicular to said central axis line (O) decreases from a bottom of said blade arranged in order on said main surface toward the head of said blade, **characterized by**
a center of the cross section of said blade perpendicular to said central axis line (O) being displaced frontward or backward in a direction of rotation about said central axis line, and displaced radially outward, from the bottom of said blade arranged in order on said main surface toward the head of said blade.

2. The cross-flow fan according to claim 1, wherein
where a cross section of the bottom of said blade perpendicular to said central axis line is a first reference plane (300),
where a cross section of the head of said blade is a second reference plane (301),
where a rotational angle by which said second reference plane is displaced from said first reference plane about said central axis line is rotational angle W,
where a length of said blade in the direction of said central axis line is length L,
where a distance by which said second reference plane is displaced radially outward from said first reference plane is distance r,
where a central point and a central line of said first reference plane are made coincident with a central point and a central line of said second reference plane respectively, an outer periphery of said second reference plane and an outer periphery of said first reference plane are spaced by a constant distance over respective whole outer peripheries of said first reference plane and said second reference plane, and where said constant distance is distance e,
W/L is not more than 0.15, and r/e is not less than 0.3 and not more than 1.5.

3. The cross-flow fan according to claim 1, wherein
said blades (224) are spaced from each other, thereby forming a gap between the blades adjacent to each other in said direction of rotation, and
said blades are arranged such that a width of at least one of a plurality of said gaps defined in said impeller is different from a width of other gaps.

4. The cross-flow fan according to claim 3, wherein
said impellers include a first impeller (226A) and a second impeller (226B) adjacent to head side of the blades of said first impeller, and
the gap formed in said first impeller and the gap of said second impeller adjacent to the gap of said first impeller are different from each other in width.

5. The cross-flow fan according to claim 4, wherein
where an arbitrary one of the plurality of blades provided to said first impeller (226A) is a first reference blade (224B) and a blade that is one of the plurality of blades provided to said second impeller and corresponds to said first reference blade is a second reference blade,
the head of said first reference blade is connected to a first main surface of the support of said second impeller, and the blades of said second impeller are arranged in order on a second main surface located opposite to said first main surface, and
the head of said first reference blade is adjacent to the bottom of a blade of said second impeller that is different from said second reference blade, and the bottom of said second reference blade is adjacent to the head of a blade of said first impeller that is different from said first reference blade.

6. The cross-flow fan according to claim 3, wherein
said impellers include a first impeller (226A) and a second impeller (226B) adjacent to head side of the blades of said first impeller, and
the gap formed in said first impeller and the gap of said second impeller adjacent to the gap of said first impeller are substantially identical to each other in width.

7. A blower comprising the cross-flow fan as recited in claim 1.

8. The blower according to claim 7, further comprising:
a casing (102) housing said cross-flow fan (200) and having an outlet formed for allowing air forced to be delivered by said cross-flow fan to blow to outside; and
a flap (130) provided in said casing and serving as a partition between a supply region for supplying air to said cross-flow fan and an outflow region for supplying air from said cross-flow fan toward said outlet, wherein
said flap is provided parallel to a rotational axis of said cross-flow fan.

9. A method of manufacturing an impeller of a cross-flow fan, said impeller including a support (225) having a main surface and a plurality of blades (224) spaced from each other on the main surface of said support, and arranged in order on said support such that said blades stand on said main surface, and respective heads of the blades of one impeller of said plurality of impellers and said support of another impeller adjacent to said one impeller being connected with each other to form said cross-flow fan,
said blades (224) each being formed such that a cross section of said blade perpendicular to said central axis line (O) decreases from a bottom of said blade arranged in order on said main surface toward the head of said blade, a center of the cross section of said blade perpendicular to said central axis line (O) being displaced frontward or backward in a direction of rotation about said central axis line, and displaced radially outward, from the bottom of said blade arranged in order on said main surface toward the head of said blade,
the method comprising the step of preparing a molding machine including a cavity formed with an inner surface formed to conform to an outer surface of said impeller.

## Patentansprüche

1. Querstromventilator, der durch Stapeln einer Vielzahl von Laufrädern (226) in einer Richtung einer Mittelachsenlinie (O) gebildet wird, wobei die Laufräder (226) jeweils Folgendes umfassen: eine Halterung (225) mit einer Hauptoberfläche und eine Vielzahl von Schaufeln (224), die auf der Hauptoberfläche der Halterung voneinander beabstandet sind und geordnet an der Halterung angeordnet sind, sodass die Schaufeln auf der Hauptoberfläche stehen, und wobei jeweilige obere Enden der Schaufeln eines Laufrads der Vielzahl von Laufrädern und die Halterung eines dem einen Laufrad benachbarten anderen Laufrads miteinander verbunden sind, um den Querstromventilator zu bilden,
wobei die Schaufeln (224) jeweils derart ausgebildet sind, dass ein Querschnitt der Schaufel senkrecht zu der Mittelachsenlinie (O) von einem unteren Ende der geordnet auf der Hauptoberfläche angeordneten Schaufel in Richtung des oberen Endes der Schaufel abnimmt, **dadurch gekennzeichnet, dass**
eine Mitte des Querschnitts der Schaufel senkrecht zu der Mittelachsenlinie (O) in einer Richtung der Drehung um die Mittelachsenlinie nach vorne oder nach hinten verschoben ist und von dem unteren Ende der geordnet auf der Hauptoberfläche angeordneten Schaufel in Richtung des oberen Endes der Schaufel radial nach außen verschoben ist.

2. Querstromventilator nach Anspruch 1, wobei
wenn es sich bei einem Querschnitt des unteren Endes der Schaufel senkrecht zu der Mittelachsenlinie um eine erste Bezugsebene (300) handelt,
wenn es sich bei einem Querschnitt des oberen Endes der Schaufel um eine zweite Bezugsebene (301) handelt,
wenn es sich bei einem Drehwinkel, um den die zweite Bezugsebene um die Mittelachsenlinie von der ersten Bezugsebene verschoben ist, um den Drehwinkel W handelt,
wenn es sich bei einer Länge der Schaufel in der Richtung der Mittelachsenlinie um die Länge L handelt,
wenn es sich bei einer Strecke, um die die zweite Bezugsebene von der ersten Bezugsebene radial nach außen verschoben ist, um die Strecke r handelt,
wenn ein Mittelpunkt und eine Mittellinie der ersten Bezugsebene mit einem Mittelpunkt bzw. einer Mittellinie der zweiten Bezugsebene zur Deckung gebracht werden, ein Außenumfang der zweiten Bezugsebene und ein Außenumfang der ersten Bezugsebene um einen konstante Strecke über den jeweiligen gesamten Außenumfang der ersten Bezugsebene und der zweiten Bezugsebene beabstandet sind und wenn es sich bei der konstanten Strecke um die Strecke e handelt,
W/L nicht mehr als 0,15 beträgt und r/e nicht weniger als 0,3 und nicht mehr als 1,5 beträgt.

3. Querstromventilator nach Anspruch 1, wobei
die Schaufeln (224) voneinander beabstandet sind und dadurch einen Zwischenraum zwischen den in der Drehrichtung einander benachbarten Schaufeln ausbilden, und
die Schaufeln derart angeordnet sind, dass eine Breite mindestens eines einer Vielzahl der in dem Laufrad definierten Zwischenräume von einer Breite anderer Zwischenräume verschieden ist.

4. Querstromventilator nach Anspruch 3, wobei
die Laufräder ein erstes Laufrad (226A) und ein dem oberen Ende der Schaufeln des ersten Laufrads benachbartes zweites Laufrad (226B) umfassen, und
der in dem ersten Laufrad ausgebildete Zwischenraum und der dem Zwischenraum des ersten Laufrads benachbarte Zwischenraum des zweiten Laufrads verschiedene Breiten aufweisen.

5. Querstromventilator nach Anspruch 4, wobei
wenn es sich bei einer beliebigen der Vielzahl von Schaufeln, mit denen das erste Laufrad (226A) versehen ist, um eine erste Bezugsschaufel (224B) handelt und es sich bei einer Schaufel, bei der es sich um eine der Vielzahl von Schaufeln, mit denen das zweite Laufrad versehen ist, handelt, und die der ersten Bezugsschaufel entspricht, um eine zweite Bezugsschaufel handelt,
das obere Ende der ersten Bezugsschaufel mit einer ersten Hauptoberfläche der Halterung des zweiten Laufrads verbunden ist und die Schaufeln des zweiten Laufrads geordnet auf einer der ersten Hauptoberfläche gegenüberliegenden zweiten Hauptoberfläche angeordnet sind
das obere Ende der ersten Bezugsschaufel dem unteren Ende einer Schaufel des zweiten Laufrads, die von der zweiten Bezugsschaufel verschieden ist, benachbart ist und das untere Ende der zweiten Bezugsschaufel dem oberen Ende einer Schaufel des ersten Laufrads, die von der ersten Bezugsschaufel verschieden ist, benachbart ist.

6. Querstromventilator nach Anspruch 3, wobei
die Laufräder ein erstes Laufrad (226A) und ein dem oberen Ende der Schaufeln des ersten Laufrads benachbartes zweites Laufrad (226B) umfassen, und
der in dem ersten Laufrad ausgebildete Zwischenraum und der dem Zwischenraum des ersten Laufrads benachbarte Zwischenraum des zweiten Laufrads eine im Wesentlichen identische Breite aufweisen.

7. Gebläse, das den Querstromventilator nach Anspruch 1 umfasst.

8. Gebläse nach Anspruch 7, das weiter Folgendes umfasst:
ein Gehäuse (102), das den Querstromventilator (200) aufnimmt und einen Auslass aufweist, der geformt ist, um zu ermöglichen, dass Luft, die zwangsweise von dem Querstromventilator gefördert wird, nach außen geblasen wird; und
eine Klappe (130), die in dem Gehäuse vorgesehen ist und als Trennwand zwischen einem Zufuhrbereich zum Zuführen von Luft zu dem Querstromventilator und einem Ausströmbereich zum Zuführen von Luft von dem Querstromventilator in Richtung des Auslasses dient, wobei
die Klappe parallel zu einer Drehachse des Querstromventilators vorgesehen ist.

9. Verfahren zum Herstellen eines Laufrads eines Querstromventilators, wobei das Laufrad Folgendes umfasst: eine Halterung (225) mit einer Hauptoberfläche und eine Vielzahl von Schaufeln (224), die auf der Hauptoberfläche der Halterung voneinander beabstandet sind und geordnet an der Halterung angeordnet sind, sodass die Schaufeln auf der Hauptoberfläche stehen, und wobei jeweilige obere Enden der Schaufeln eines Laufrads der Vielzahl von Laufrädern und die Halterung eines dem einen Laufrad benachbarten anderen Laufrads miteinander verbunden sind, um den Querstromventilator zu bilden,
wobei die Schaufeln (224) jeweils derart ausgebildet sind, dass ein Querschnitt der Schaufel senkrecht zu der Mittelachsenlinie (O) von einem unteren Ende der geordnet auf der Hauptoberfläche angeordneten Schaufel in Richtung des oberen Endes der Schaufel abnimmt, wobei eine Mitte des Querschnitts der Schaufel senkrecht zu der Mittelachsenlinie (O) in einer Richtung der Drehung um die Mittelachsenlinie nach vorne oder nach hinten verschoben ist und von dem unteren Ende der geordnet auf der Hauptoberfläche angeordneten Schaufel in Richtung des oberen Endes der Schaufel radial nach außen verschoben ist,
wobei das Verfahren den Schritt des Anfertigens einer Formmaschine mit einer Höhlung umfasst, die mit einer inneren Oberfläche ausgebildet ist, die ausgebildet ist, um einer äußeren Oberfläche des Laufrads zu entsprechen.

## Revendications

1. Ventilateur tangentiel formé en empilant une pluralité de roues (226) dans une direction d'une ligne d'axe central (O), lesdites roues (226) comprenant chacune un support (225) ayant une surface principale et une pluralité d'aubes (224) espacées les unes par rapport aux autres sur la surface principale dudit support, et agencées dans l'ordre sur ledit support de telle sorte que lesdites aubes se tiennent sur ladite surface principale, et des têtes respectives des aubes d'une roue de ladite pluralité de roues et ledit support d'une autre roue se trouvant de manière adjacente par rapport à ladite une roue étant connectés les uns par rapport aux autres pour former ledit ventilateur tangentiel,
lesdites aubes (224) étant chacune formées de telle sorte qu'une section transversale de ladite aube perpendiculaire par rapport à ladite ligne d'axe central (O) va en diminuant depuis une partie inférieure de ladite aube agencée dans l'ordre sur ladite surface principale vers la tête de ladite aube, **caractérisé en ce que**
un centre de la section transversale de ladite aube perpendiculaire par rapport à ladite ligne d'axe central (O) est déplacé vers l'avant ou vers l'arrière dans une direction de rotation autour de ladite ligne d'axe central et est déplacé dans le sens radial vers l'extérieur, depuis la partie inférieure de ladite aube agencée dans l'ordre sur ladite surface principale vers la tête de ladite aube.

2. Ventilateur tangentiel selon la revendication 1, dans lequel
dans le cas de figure où une coupe transversale de la partie inférieure de ladite aube perpendiculaire par rapport à ladite ligne d'axe central est un premier plan de référence (300),
dans le cas de figure où une coupe transversale de la tête de ladite aube est un deuxième plan de référence (301),
dans le cas de figure où un angle de rotation selon lequel ledit deuxième plan de référence est déplacé par rapport audit premier plan de référence autour de ladite ligne d'axe central est l'angle de rotation W,
dans le cas de figure où une longueur de ladite aube dans la direction de ladite ligne d'axe central est la longueur L,
dans le cas de figure où une distance selon laquelle ledit deuxième plan de référence est déplacé dans le sens radial vers l'extérieur par rapport audit premier plan de référence est la distance r,
dans le cas de figure où un point central et une ligne centrale dudit premier plan de référence coïncident par rapport à un point central et une ligne centrale dudit deuxième plan de référence respectivement, une périphérie extérieure dudit deuxième plan de référence et une périphérie extérieure dudit premier plan de référence sont espacées selon une distance constante sur l'ensemble des périphéries extérieures respectives dudit premier plan de référence et dudit deuxième plan de référence, et dans le cas de figure où ladite distance constante est la distance e,
W/L ne fait pas plus de 0,15, et r/e ne fait pas moins de 0,3 et pas plus de 1,5.

3. Ventilateur tangentiel selon la revendication 1, dans lequel
lesdites aubes (224) sont espacées les unes par rapport aux autres, pour de ce fait former un espace entre les aubes se trouvant de manière adjacente les unes par rapport aux autre dans ladite direction de rotation, et
lesdites aubes sont agencées de telle sorte qu'une largeur d'au moins l'un d'une pluralité desdits espaces définis dans ladite roue est différente d'une largeur des autres espaces.

4. Ventilateur tangentiel selon la revendication 3, dans lequel
lesdites roues comprennent une première roue (226A) et une deuxième roue (226B) se trouvant de manière adjacente par rapport au côté tête des aubes de ladite première roue, et
l'espace formé dans ladite première roue et l'espace de ladite deuxième roue se trouvant de manière adjacente par rapport à l'espace de ladite première roue sont différents l'un par rapport à l'autre en termes de largeur.

5. Ventilateur tangentiel selon la revendication 4, dans lequel
dans le cas de figure où une aube arbitraire de la pluralité d'aubes mises en oeuvre sur ladite première roue (226A) est une première aube de référence (224B) et une aube qui est l'une de la pluralité d'aubes mises en oeuvre sur ladite deuxième roue et qui correspond à ladite première aube de référence est une deuxième aube de référence,
la tête de ladite première aube de référence est connectée à une première surface principale du support de ladite deuxième roue, et les aubes de ladite deuxième roue sont agencées dans l'ordre sur une deuxième surface principale située à l'opposé de ladite première surface principale, et
la tête de ladite première aube de référence se trouve de manière adjacente par rapport à la partie inférieure d'une aube de ladite deuxième roue qui est différente de ladite deuxième aube de référence, et la partie inférieure de ladite deuxième aube de référence se trouve de manière adjacente par rapport à la tête d'une aube de ladite première roue qui est différente de ladite première aube de référence.

6. Ventilateur tangentiel selon la revendication 3, dans lequel
lesdites roues comprennent une première roue (226A) et une deuxième roue (226B) se trouvant de manière adjacente par rapport au côté tête des aubes de ladite première roue, et
l'espace formé dans ladite première roue et l'espace de ladite deuxième roue se trouvant de manière adjacente par rapport à l'espace de ladite première roue sont sensiblement identiques l'un par rapport à l'autre en termes de largeur.

7. Soufflante comportant le ventilateur tangentiel selon la revendication 1.

8. Soufflante selon la revendication 7, comportant par ailleurs :
un carter (102) logeant ledit ventilateur tangentiel (200) et ayant une sortie formée pour permettre le soufflage vers l'extérieur de l'air forcé à être distribué par ledit ventilateur tangentiel ; et
un volet (130) mis en oeuvre dans ledit carter et servant de cloison de séparation entre une région d'alimentation servant à fournir de l'air audit ventilateur tangentiel et une région d'écoulement en sortie servant à acheminer l'air en provenance dudit ventilateur tangentiel vers ladite sortie, dans laquelle
ledit volet est mis en oeuvre de manière parallèle par rapport à un axe de rotation dudit ventilateur tangentiel.

9. Procédé de fabrication d'une roue d'un ventilateur tangentiel, ladite roue comprenant un support (225) ayant une surface principale et une pluralité d'aubes (224) espacées les unes par rapport aux autres sur la surface principale dudit support, et agencées dans l'ordre sur ledit support de telle sorte que lesdites aubes se tiennent sur ladite surface principale, et des têtes respectives des aubes d'une roue de ladite pluralité de roues et ledit support d'une autre roue se trouvant de manière adjacente par rapport à ladite une roue étant connectés les uns par rapport aux autres pour former ledit ventilateur tangentiel,
lesdites aubes (224) étant chacune formées de telle sorte qu'une section transversale de ladite aube perpendiculaire par rapport à ladite ligne d'axe central (O) va en diminuant depuis une partie inférieure de ladite aube agencée dans l'ordre sur ladite surface principale vers la tête de ladite aube, un centre de la section transversale de ladite aube perpendiculaire par rapport à ladite ligne d'axe central (O) étant déplacé vers l'avant ou vers l'arrière dans une direction de rotation autour de ladite ligne d'axe central et étant déplacé dans le sens radial vers l'extérieur, depuis la partie inférieure de ladite aube agencée dans l'ordre sur ladite surface principale vers la tête de ladite aube,
le procédé comportant l'étape consistant à préparer une machine à mouler comprenant une cavité formée avec une surface intérieure formée pour se conformer à une surface extérieure de ladite roue.
